# EUROPEAN PATENT APPLICATION

(11) **EP 3 553 378 A1**
(43) Date of publication of application: **16.10.2019**
(21) Application number: 18020148.5
(22) Date of filing: 13.04.2018
(51) Int. Cl.: F23D 14/22, F23D 14/32, F23D 14/02, C01B 17/04

(54) **METHOD AND BURNER FOR COMBUSTING HYDROGEN SULPHIDE**

(71) Applicant: Linde Aktiengesellschaft, 80331 München (DE)
(72) Inventor: Obermeyer, Heinz-Dieter, 85356 Freising (DE); Blum, Ingomar, 83342 Tacherting (DE); Tian, Xiaoping, Pinchbeck, Lincolnshire PE11 3UD (GB); Ulmer, Sebastian, 81477 München (DE)
(74) Representative: Gellner, Bernd

(57) **Abstract**

The present invention relates to a method of combusting hydrogen sulphide with oxygen by means of a burner (20) and to such a burner (20), the outlet of which being connected to a furnace (40) which is heated by a burner flame, said method including the step of preheating the furnace (40), wherein during the preheating step, a first fuel gas is supplied through a first port (25) of the burner, the first port (25) being connected to a plurality of first tubes (21) extending to the burner outlet, a first oxidant gas is supplied through a second port (26) of the burner, the second port (26) being connected to a plurality of second tubes (22) spaced from and coaxial with the first tubes (21), and a second oxidant gas or second fuel gas is supplied through a third port (27) of the burner, the third port (27) being connected to a plurality of third tubes (23) spaced from and coaxial with the second tubes (22), and wherein during the normal operation of combusting hydrogen sulphide with oxygen, a third fuel gas is supplied through the first port (25) and the first tubes (21), a third oxidant gas is supplied through the second port (26) and the second tubes (22), and a fourth fuel gas is supplied through the third port (27) and the third tubes (23).

## Description

The present invention relates to a method and a burner for combusting hydrogen sulphide (H₂S) with oxygen, the outlet of the burner being connected to a furnace which is heated by a burner flame including the step of preheating the furnace. More generally, the present invention relates to the partial oxidation (partial combustion) of hydrogen sulphide for forming sulphur.

### State of the art

Hydrogen sulphide containing gas streams (herein also referred to as "acid gas streams") are particularly formed in oil refineries and natural gas processing units. Such streams cannot be vented directly to the atmosphere because hydrogen sulphide is poisonous. A conventional method of treating a hydrogen sulphide containing gas stream is by the well known Claus process. In this process a part of the hydrogen sulphide content of the gas stream is combined with an oxidant gas such as air and is subjected to combustion in a furnace so as to form sulphur dioxide. The sulphur dioxide then reacts in the furnace with residual hydrogen sulphide so as to form sulphur vapor. Thus, the hydrogen sulphide is effectively partially oxidized. The reaction between hydrogen sulphide and sulphur dioxide does not go to completion. The effluent gas stream from the furnace is cooled and sulphur is extracted, typically by condensation, from the cooled effluent gas stream. The resulting gas stream, still containing residual hydrogen sulphide and sulphur dioxide, passes through a train of stages in which catalysed reaction between the residual hydrogen sulphide and the sulphur dioxide takes place. The sulphur vapor produced is condensed downstream of each stage.

Axially - or longitudinally - fired burners mounted on the back wall of a furnace may be used in Claus furnaces. Such burners are known from EP 0315 225 A1 and from GB 2467930 A.

Air, or more efficiently, commercially pure oxygen or oxygen-enriched air can be used as an oxidant gas to support the combustion of hydrogen sulphide in the initial part of the Claus process. However, if commercially pure oxygen or oxygen-enriched air having a mole fraction of oxygen above 0.65 is used as an oxidant gas, there may be a relatively high risk of damage to the refractory lining of the furnace due to the resulting high flame temperature. The degree of this risk will also depend on the composition of the Claus feed gas.

Possible ways of treating a feed gas stream comprising hydrogen sulphide are disclosed in US 6,893,620 B2 and in US 6,919,059 B2 where two furnaces are employed to support combustion of part of the hydrogen sulphide content of a feed gas stream with oxygen or oxygen-enriched air.

As the normal operation of combusting hydrogen sulphide with oxygen typically takes place at high temperatures in the furnace, especially when using pure oxygen or oxygen-enriched air, in order to avoid thermal stresses on the refractory lining of the furnace, preheating of the furnace is necessary. The preheating process is done by a pilot burner which is installed separately from the main burner and typically close to the main burner in the furnace. With the pilot burner a dry-out and warm-up process typically having a thermal energy rate of 50 K/h is performed until the inner of the furnace reaches a temperature of more than about 1000 degree Celsius. Before taking the main burner into operation, the pilot burner has to be removed or pulled out of the furnace after completion of the preheating process as due to the high temperatures of the main burner flame, there is a risk of damaging the pilot burner.

It is an object of the present invention to provide a method and a burner for combusting hydrogen sulphide with oxygen (generally an oxidant gas) including the step of preheating the furnace which is fired by the burner, where the disadvantages of using a pilot burner are reduced or overcome.

### Disclosure of the invention

The general idea underlying the present invention is to integrate or incorporate the pilot burner into the main burner. This general idea leads to a burner according to a first aspect of the present invention and to another burner according to a second aspect of the present invention. Correspondingly, a method of combusting hydrogen sulphide with oxygen according to the first aspect of the invention and another method of combusting hydrogen sulphide with oxygen according to the second aspect of the present invention are given. The methods and burners according to the first and second aspects of the present invention are the subject-matters of the independent claims. Preferred embodiments are given in the dependent claims and in the description which follows.

According to the first aspect of the present invention, in a method of combusting hydrogen sulphide with oxygen by means of a burner, the outlet of the burner being connected to a furnace which is heated by a burner flame, the method including the step of preheating the furnace, during the preheating step, a first fuel gas is supplied through a first port of the burner, the first port being connected to a plurality of first tubes extending to the burner outlet, a first oxidant gas is supplied to a second port of the burner, the second port being connected to a plurality of second tubes spaced from and coaxial with the first tubes, and a second oxidant gas or second fuel gas is supplied through a third port of the burner, the third port being connected to a plurality of third tubes spaced from and coaxial with the second tubes. As already mentioned above, the preheating process serves the purpose of starting-up the furnace and to slowly ramp up the temperature inside the furnace vessel to avoid thermal stresses on the refractory lining of the furnace. After preheating, typically the normal operation of combusting hydrogen sulphide follows. There might, however, be the case of another intermediate process between the preheating process and the normal operation. According to the first aspect of the present invention, during preheating, the oxidant and fuel gases are supplied through first, second and third tubes having a tube-in-tube-in-tube design such that a fuel gas flow is formed surrounded by a first oxidant gas flow, which is surrounded by a second oxidant gas flow or second fuel gas flow.

During the normal operation of combusting hydrogen sulphide with oxygen, according to the first aspect of the present invention, a third fuel gas is supplied through the first port and the first tubes, a third oxidant gas is supplied through the second port and the second tubes and a fourth fuel gas is supplied through the third port and the third tubes. Thus, the preheating process uses the same burner having first, second and third tubes as it is used for the normal operation. Therefore, the method according to the first aspect of the present invention does not need a pilot burner for preheating the furnace and is advantageously performed in a furnace not having any pilot burner. During normal operation, a third oxidant gas and a third and fourth fuel gas, at least one of them - preferably both - being a hydrogen sulphide containing gas ("acid gas") are supplied through the first, second and third tubes of the burner such that a hydrogen sulphide containing gas flow is formed surrounded by a third oxidant gas flow which third oxidant gas flow is surrounded by the fourth fuel gas flow. Said flows exit the burner outlet and are mixed and combusted when entering the furnace.

The integration of the pilot burner into the main burner according to the first aspect of the present invention makes it possible to establish dry-out, warm-up of refractory during the preheating process (start-up) and to support the main burner for part load and full load operation during the normal operation.

Further, according to the first aspect of the present invention, a burner for combusting hydrogen sulphide with oxygen is provided, the outlet of the burner being connectable to a furnace, the burner comprising an integrated pilot burner, particularly a first port connected to a plurality of first tubes extending to the burner outlet, and the burner further comprising a second port connected to a plurality of second tubes spaced from and coaxial with the first tubes, and a third port connected to a plurality of third tubes spaced from and coaxial with the second tubes.

With such a burner according to the first aspect of the present invention, a method according to the first aspect of the present invention as described above can be advantageously performed.

The term "a plurality of second tubes spaced from and coaxial with the first tubes" is to be understood that each second tube is spaced from and coaxial with one of said first tubes. Analogously, the term "a plurality of third tubes spaced from and coaxial with the second tubes" is to be understood as each third tube is spaced from and coaxial with one of said second tubes.

In the following, preferred embodiments of the method and the burner according to the first aspect of the present invention are described.

In a preferred embodiment, the first fuel gas is supplied through a number of 2 to 64, particularly 4 to 32, more particularly 8 to 16 first tubes. Preferably, the first tubes are equally distributed in the cross section of the burner.

In a further preferred embodiment, the first fuel gas is conducted parallel to the main burner axis through the first tubes. In this embodiment, the first tubes extend in the longitudinal direction of the burner and parallel to its main axis. Due to the tube-in-tube-in-tube design, the preferred structures and numbers for the first tubes as described above also apply to the second and third tubes.

In another preferred embodiment, during preheating, a fourth oxidant gas is supplied through a fourth port of the burner, the fourth port being connected with at least one fourth tube spaced from and surrounding the third tubes. In this embodiment, the fourth tube may be one pipe surrounding all the third tubes and being connected to the furnace. The fourth oxidant gas may be air, oxygen-enriched air or oxygen (i.e. commercially available pure oxygen), more preferred air, optionally including water vapor or steam, for providing further oxygen to the combustion process and for cooling the third tubes and thus the tube-in-tube-in-tube arrangement. During normal operation, a fifth fuel gas can be supplied through this fourth port of the burner, the fifth fuel gas preferably being an acid gas.

In the method according to the first aspect of the present invention, during the preheating step, preferably air is used as the first and second oxidant gases (but also oxygen-enriched air or commercially available pure oxygen can be envisaged), while a fuel gas such as natural gas can be used as the first and second fuel gases. During normal operation, preferably oxygen-enriched air or commercially available pure oxygen can be used as the third oxidant gas, while the hydrogen sulphide containing gas (third and fourth fuel gases and if applicable the fifth fuel gas) usually is an acid gas (Sauergas), optionally further comprising natural gas, syngas and/or water vapor.

In an intermediate step between the preheating process and the normal operation, a fuel gas like acid gas can be already supplied through the first and third ports while an oxidant gas like air is introduced through the second port and if needed also through the fourth port.

In the following, the method and the burner according to the second aspect of the present invention will be described in more detail.

According to the second aspect of the present invention, in a method of combusting hydrogen sulphide with oxygen by means of a burner, the outlet of which being connected to a furnace which is heated by a burner flame, said method including the step of preheating the furnace, during the preheating step, a first mixture of oxidant gas and fuel gas is supplied through a first port of the burner, the first port being connected to at least one first tube extending to the burner outlet. During the normal operation of combusting hydrogen sulphide with oxygen, a first fuel gas, preferably a hydrogen sulphide containing acid gas, is supplied through the first port of the burner, a first oxidant gas is supplied through a second port of the burner, the second port being connected to at least one second tube extending to the burner outlet, and a second fuel gas, preferably again acid gas is supplied to a third port of the burner, the third port being connected to at least one third tube spaced from and coaxial with the at least one second tube.

From the above it is clear that the preheating process and the normal combustion operation are performed by means of the same burner. A separately installed pilot burner is no longer necessary and it is preferred that the method according to the second aspect of the invention is performed in a furnace not having any pilot burner. A pilot burner is rather integrated into the burner according to the second aspect of the present invention.

During the preheating step, a first mixture of oxidant gas and fuel gas, preferably natural gas and air, is conducted through the first tube or first tubes extending to the burner outlet, i.e. to the furnace entrance. The mixture is ignited such that oxidant gas and fuel gas are combusted resulting in the desired preheating process. If necessary, oxidant gases, preferably air, can be supplied through the second and/or third ports.

In a preferred embodiment, the first mixture of oxidant gas and fuel gas is supplied through a number of 1 to 6, particularly 1 to 3, more particularly only one first tube(s), one of said first tubes or - in case of only one first tube - the first tube particularly being located on the main burner axis. By this measure, a pilot burner is integrated into the main burner by arranging a single first tube or a small number of first tubes preferably on or around the main burner axis and conducting an oxidant/fuel gas mixture through this first tube and first tubes, respectively. As opposed to the first aspect of the present invention, the first tube(s) are not part of a tube-in-tube-in-tube arrangement. Rather, only the at least one second tube and the at least one third tube are in a tube-in-tube arrangement.

In a preferred embodiment, the at least one second and third tubes are a plurality of second and third tubes, more specifically the number of second tubes (and thus also the number of third tubes) being 2 to 64, particularly 4 to 32, more particularly 8 to 16.

Similar to an embodiment according to the first aspect of the present invention, in an embodiment according to the second aspect of the present invention, during normal operation, a third fuel gas/acid gas can be supplied through a fourth port of the burner, the fourth port being connected with at least one fourth tube spaced from and surrounding the third tubes. During the preheating step, a second oxidant gas, preferably air, is supplied through this fourth port. Regarding this embodiment, reference is made to the respective embodiment according to the first aspect of the present invention.

A burner according to the second aspect of the present invention for combusting hydrogen sulphide with oxygen, the outlet of the burner being connectable to a furnace, comprises an integrated pilot burner, particularly a first port connected to at least one first tube extending to the burner outlet, and further comprises a second port connected to a plurality of second tubes extending to the burner outlet, and a third port connected to a plurality of third tubes spaced from and coaxial with the second tubes. Again, the term "a plurality of third tubes spaced from and coaxial with the second tubes" is understood to mean that each third tube is spaced from and coaxial with one of said second tubes.

Regarding preferred embodiments of this burner according to the second aspect of the present invention, reference is explicitly made to the embodiments of the method according to the second aspect of the present invention, especially regarding the number of second tubes and the number of first tubes as well as a fourth port of the burner, especially in the form of a pipe, surrounding the third tubes.

Further advantages and preferred embodiments of the invention are disclosed in the following description and figures.

It is understood by a person skilled in the art that the preceding and the following features are not only disclosed in the detailed combinations as discussed or showed in the figures but that also other combinations of the features can be used without exceeding the scope of the present invention.

The invention will now be further described with reference to the accompanying drawings showing preferred embodiments.

### Brief description of the drawings

- Figure 1: schematically shows a burner for combusting hydrogen sulphide connected to a furnace according to the prior art.
- Figure 2: schematically shows an embodiment of a burner for combusting hydrogen sulphide according to the first aspect of the present invention.
- Figure 3: schematically shows an embodiment of a burner for combusting hydrogen sulphide according to the second aspect of the present invention.

### Description of the embodiments according to the figures

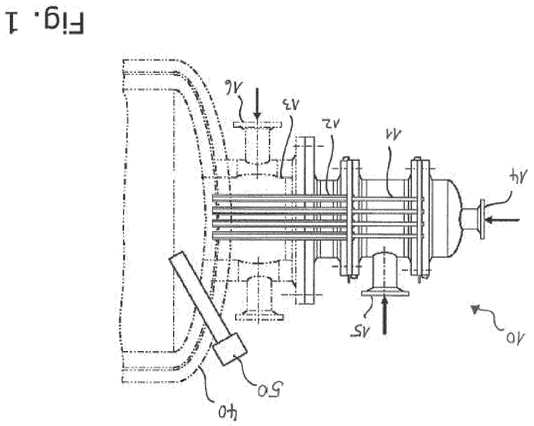

Figure 1 schematically shows a burner 10 for combusting hydrogen sulphide with oxygen according to the prior art. The corresponding thermal process is operated in a furnace 40 which is equipped with a main burner 10 and a pilot burner 50. Large units as the one shown in Figure 1 require a start-up process for preheating the furnace 40 to avoid thermal stresses on the refractory lining of the furnace 40. The preheating process is controlled by the pilot burner 50 which is installed separately from and close to the main burner 10. The thermal energy rate of the preheating process is typically about 50 K/h and is stopped after the furnace vessel has reached a temperature of about 1000 - 1100 degree Celsius. Before taking the main burner 10 into operation, the pilot burner 50 has to be retracted or entirely pulled out of the furnace 40 due to the risk of damaging the pilot burner 50 due to the high temperatures of the main burner flame.

After the preheating step, the main burner 10 is taken into operation to start normal operation by introducing a hydrogen sulphide containing fuel gas/acid gas and an oxidant gas, preferably oxygen or oxygen-enriched air, through the second port 15 and the first port 14, respectively. The first port 14 is connected to a plurality of first tubes 11. The second port 15 is connected to a plurality of second tubes 12, the second tubes 12 being spaced from and coaxial with the first tubes 11. First and second tubes 11, 12 extend to the burner outlet which corresponds to the entrance of the furnace 40. In the embodiment shown in Figure 1, a third port 16 is part of the burner 10, which third port 16 is connected to a third tube 13 in the form of a pipe surrounding the second tubes 12. A further acid gas can be fed through port 16 and pipe 13 in order to provide further hydrogen sulphide containing fuel gas to the combustion process inside the furnace 40.

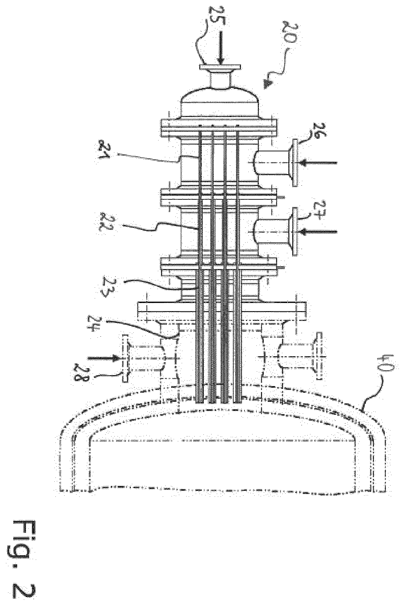

Figure 2 shows a burner furnace system without a pilot burner according to an embodiment according to the first aspect of the present invention. Pilot burner and main burner are combined into a new burner 20 with the synergistic effect that the part of the burner 20 used for preheating the furnace 40 can also be used for part load and full load operation during normal operation.

The burner 20 for combusting hydrogen sulphide with oxygen is connected to the furnace 40. The burner 20 comprises (as an integrated pilot burner) a first port 25 connected to a plurality of first tubes 21 extending to the burner outlet. Further, the burner 20 comprises (as a main burner part) a second port 26 connected to a plurality of second tubes 22 spaced from and coaxial with the first tubes 21, and a third port 27 connected to a plurality of third tubes 23 spaced from and coaxial with the second tubes 22. First, second, and third tubes 21, 22, 23 thus form a tube-in-tube-in-tube arrangement. In the embodiment shown in Figure 2, the number of first tubes is 8 or 16 (depending on the power requirements), and the first tubes 21 are parallel to the main burner axis (longitudinal axis). Optionally, burner 20 comprises a fourth port 28, the fourth port 28 being connected with a fourth tube 24, i.e. a pipe 24 surrounding the third tubes 23. The pipe 24 is connected to the entrance of the furnace 40.

In operation, furnace 40 is first preheated to a temperature at which normal operation can be started. During the preheating step, as a first fuel gas, preferably natural gas, is supplied through the first port 25 and thus conducted through the plurality of first tubes 21 up to the burner outlet. As a first oxidant gas, preferably air is supplied through the second port 26 and thus conducted through the second tubes 22 which are spaced from and coaxial with the first tubes 21. As a second oxidant gas, air is supplied through the third port 27 and thus conducted through the third tubes 23 which are spaced from and coaxial with the second tubes 22. A fuel gas flow surrounded by an oxidant gas/air flow, which is surrounded by another oxidant gas/air flow is thus formed and enters the furnace 40 where the resultant flows are mixed and combusted.

After this preheating step, if necessary, the power of preheating can be increased in an intermediate step by supplying a fuel gas, preferably acid gas, through the first and third ports 25 and 27 of the burner 20, while supplying oxidant gas, preferably air, through the second (and fourth) ports 26, 28 of the burner 20.

During normal operation of combusting hydrogen sulphide with oxygen, as a third fuel gas, acid gas is supplied through the first port 25 and thus conducted through the first tubes 21, and as a third oxidant gas, oxygen or oxygen-enriched air is supplied through the second port 26 and thus conducted through the second tubes 22, and as a fourth fuel gas, acid gas is supplied through the third port 27 and thus conducted through the third tubes 23.

It can be seen by a person skilled in the art that port 25 and first tubes 21 do not only have the function of enabling the preheating step but also support the main operation of the burner. The "pilot burner" 25, 21 can be retro-fitted into a burner 10 according to the prior art (see Figure 1) and can remain in the main burner and has not to be removed after start-up. The capacity of the pilot burner part 25, 21 can be used for the main burner part without the need of two separate units.

Still, also in the embodiment shown in Figure 2, a fourth port 28 can be provided which is connected with a fourth tube or pipe 24 surrounding the third tubes 23. This option was already discussed above, also in connection with Figure 1.

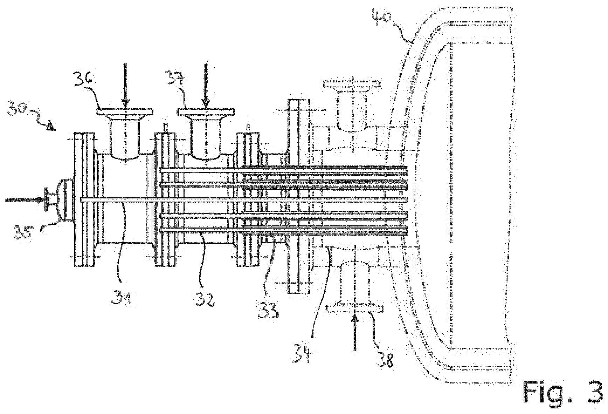

Figure 3 shows an embodiment of another burner 30 according to the second aspect of the present invention.

The burner 30 shown in Figure 3 is connected with its outlet to the furnace 40 and comprises an integrated pilot burner, in particular a first port 35 connected to one first tube 31 extending to the burner outlet. The burner 30 further comprises a second port 36 connected to a plurality of second tubes 32 and a third port 37 connected to a plurality of third tubes 33 spaced from and coaxial with the second tubes 32. Second and third tubes 32 and 33 form a tube-in-tube arrangement extending to the burner outlet. The number, orientation and distribution of the second and third tubes 32, 33 can be the same as in Figure 2. Again, a fourth port 38 can be provided which is connected with a fourth tube or pipe 34 surrounding the third tubes 33.

In operation, during the preheating step, as a first mixture of oxidant gas and fuel gas, natural gas and air are supplied through first port 35 of the burner 30 and thus conducted through the first tube 31 up to the burner outlet and into the furnace 40 where the mixture is ignited for preheating the vessel of the furnace 40. Further oxidant gases, preferably air, are supplied through the second and/or third and/or fourth ports. Depending on the required preheating power, the number of first tubes 31 can be increased.

During normal operation, as a first oxidant gas, preferably oxygen or oxygen-enriched air is supplied through the second port 36 of the burner 30 and thus conducted through the second tubes 32 extending to the burner outlet, and as an hydrogen sulphide containing gas, acid gas is supplied to the first and third ports 35 and 37 of the burner 30 and thus conducted through the first and third tubes 31 and 33.

Regarding further embodiments and advantages of the burner 30 according to Figure 3 reference is made to the embodiment of Figure 2.

## Claims

1. A method of combusting hydrogen sulphide with oxygen by means of a burner (20), the outlet of which being connected to a furnace (40) which is heated by a burner flame, said method including the step of preheating the furnace (40), wherein during the preheating step, a first fuel gas is supplied through a first port (25) of the burner, the first port (25) being connected to a plurality of first tubes (21) extending to the burner outlet,
a first oxidant gas is supplied through a second port (26) of the burner, the second port (26) being connected to a plurality of second tubes (22) spaced from and coaxial with the first tubes (21),
and a second oxidant gas or second fuel gas is supplied through a third port (27) of the burner, the third port (27) being connected to a plurality of third tubes (23) spaced from and coaxial with the second tubes (22),
and wherein during the normal operation of combusting hydrogen sulphide with oxygen, a third fuel gas is supplied through the first port (25) and the first tubes (21), a third oxidant gas is supplied through the second port (26) and the second tubes (22), and a fourth fuel gas is supplied through the third port (27) and the third tubes (23).

2. The method of claim 1, wherein the first fuel gas is supplied through a number of 2 to 64, particularly of 4 to 32, more particularly of 8 to 16 first tubes (21).

3. The method of claim 1 or 2, wherein the first fuel gas is conducted parallel to the main burner axis through the first tubes (21).

4. The method of any one of claim 1 to 3, wherein, during preheating, a fourth oxidant gas and/or, during normal operation, a fifth fuel gas is supplied through a fourth port (28) of the burner, the fourth port (28) being connected with at least one fourth tube (24) spaced from and surrounding the third tubes (23).

5. A method of combusting hydrogen sulphide with oxygen by means of a burner (30), the outlet of which being connected to a furnace (40) which is heated by a burner flame, said method including the step of preheating the furnace (40), wherein during the preheating step, a first mixture of oxidant gas and fuel gas is supplied through a first port (35) of the burner, the first port (35) being connected to at least one first tube (31) extending to the burner outlet,
and wherein during the normal operation of combusting hydrogen sulphide with oxygen, a first oxidant gas is supplied through a second port (36) of the burner, the second port (36) being connected to at least one second tube (32) extending to the burner outlet, and an hydrogen sulphide containing first fuel gas is supplied to the first port (35) and a second fuel gas is supplied to a third port (37) of the burner, the third port (37) being connected to at least one third tube (33) spaced from and coaxial with the at least one second tube (32).

6. The method of claim 5, wherein the first oxidant gas is supplied through a plurality of second tubes (32), the number of second tubes (32) being 2 to 64, particularly 4 to 32, more particularly 8 to 16.

7. The method of any one of claims 5 to 6, wherein the first mixture of oxidant gas and fuel gas is supplied through a number of 1 to 6, particularly 1 to 3, more particularly only 1 first tube (31) or tubes (31), one of said first tubes (31) particularly being located on the main burner axis.

8. The method of any one of claim 5 to 7, wherein, during preheating, a second oxidant gas is supplied through a fourth port (38) of the burner, the fourth port (38) being connected with at least one fourth tube (34) spaced from and surrounding the third tubes (33).

9. The method of any one of claim 5 to 8, wherein, during normal operation, a third fuel gas is supplied through a fourth port (38) of the burner, the fourth port (38) being connected with at least one fourth tube (34) spaced from and surrounding the third tubes (33).

10. A burner (20) for combusting hydrogen sulphide with oxygen, the outlet of the burner being connectable to a furnace (40),
wherein said burner (20) comprises an integrated pilot burner, in particular a first port (25) connected to a plurality of first tubes (21) extending to the burner outlet,
and wherein the burner further comprises a second port (26) connected to a plurality of second tubes (22) spaced from and coaxial with the first tubes (21), and a third port (27) connected to a plurality of third tubes (23) spaced from and coaxial with the second tubes (22).

11. The burner (20) of claim 10, wherein the number of first tubes (21) is 2 to 64, particularly, 4 to 32, more particularly 8 to 16.

12. The burner (20) of claims 10 or 11, wherein the first tubes (21) are parallel to the main burner axis.

13. The burner (20) of any one of claims 10 to 12, wherein the burner (20) further comprises a fourth port (28), the fourth port (28) being connected with at least one fourth tube (24) spaced from and surrounding the third tubes (23).

14. A burner (30) for combusting hydrogen sulphide with oxygen, the outlet of the burner (30) being connectable to a furnace (40),
wherein said burner (30) comprises an integrated pilot burner, in particular a first port (35) connected to at least one first tube (31) extending to the burner outlet,
and wherein said burner (30) further comprises a second port (36) connected to a plurality of second tubes (32), and a third port (37) connected to a plurality of third tubes (33) spaced from and coaxial with the second tubes (32).

15. The burner (30) of claim 14, wherein the number of second tubes (32) being more than two, particularly 2 to 64, more particularly 4 to 32, and even more particularly 8 to 16.

16. The burner (30) of claims 14 or 15, wherein the number of first tubes (31) is 1 to 6, particularly 1 to 3, more particularly 1, one of said first tubes particularly being located on the main burner axis.

17. The burner (30) of any one of claims 14 to 16, wherein the burner (30) further comprises a fourth port (38), the fourth port (38) being connected with at least one fourth tube (34) spaced from and surrounding the third tubes (33).
